# EUROPÄISCHE PATENTSCHRIFT

(11) **EP 2 759 385 B1**
(45) Veröffentlichungstag und Bekanntmachung des Hinweises auf die Patenterteilung: **21.03.2018**
(21) Anmeldenummer: 11186272.8
(22) Anmeldetag: 22.10.2011
(51) Int. Cl.: B27D 1/04, B27D 1/10, B32B 21/14, B32B 38/18, B27M 3/00

(54) **Verfahren zur Herstellung eines Furnierstranges im Zuge der Herstellung von Furnierschichtholz**
Method for producing a veneer strip as part of the production of veneer wood
Procédé pour la fabrication d'un faisceau de placage dans le flux de la fabrication de bois de couche de placage

(30) Priorität: 22.10.2010 DE 102010049128
(43) Veröffentlichungstag der Anmeldung: 30.07.2014
(73) Patentinhaber: Dieffenbacher Maschinenfabrik GmbH, 75059 Zaisenhausen (DE)
(72) Erfinder: Salenz, Dieter, 75059 Zaisenhausen (DE)
(74) Vertreter: Hartdegen, Anton

(56) Entgegenhaltungen:
- DE-A1- 19 627 024
- DE-C2- 19 882 772
- US-A- 3 963 552
- US-A- 4 797 169
- US-B2- 6 865 800

## Beschreibung

Die Erfindung betrifft ein Verfahren zur Herstellung eines Furnierstranges im Zuge der Herstellung von Furnierschichtholz nach dem Oberbegriff des Patentanspruches 1.

Die Herstellung von so genanntem Lagenholz zu Holzplatten ist lange bekannter Stand der Technik. Abstrahiert werden mehrere Lagen aus beleimten Holz, vorzugsweise Bretter oder Furniere aufeinander gelegt und verpresst. Insbesondere unterscheiden sich die beiden Arten Furnierschichtholz und Furniersperrholz darin, dass beim Furniersperrholz die Ausrichtung der einzelnen Lagen zueinander versetzt, vorzugsweise kreuzweise, angeordnet werden, damit man in allen Ausrichtungen die gleiche Zug- und Biegefestigkeiten erhält. Auch wird durch das kreuzweise Verleimen der Furniere die Stabilität und Standfestigkeit gewährleistet, weil das Holz in seinen natürlichen Eigenschaften des Quellens und Schwindens, insbesondere bei Temperaturunterschieden, eingeschränkt wird. Furnierschichtholz (gemeint sind vorzugsweise alle Lagenhölzer) weist eine Vielzahl von Verwendungsmöglichkeiten auf und kann nach oder während der Herstellung mittels einfacher Anpassungen konfiguriert und/oder weiterverarbeitet werden. Mittlerweile ermöglichen neu entwickelte Leime bevorzugt die Parallelausrichtung der Furniere zueinander, so dass die Herstellung von Furnierschichtholz an Bedeutung zunimmt. Beispielsweise ist es gewünscht bei langlebigen Oberflächenprodukten (Treppenaufbauten oder dergleichen) einen Abschliff zu ermöglichen, ohne dass die nachfolgende Lage eine andere Orientierung der Faserrichtung aufweist.

Unter Furnier versteht ein Fachmann unter einem bis mehrere Millimeter dicke Blätter aus Holz. Diese können aus verschiedenen Hölzern und mittels verschiedener Techniken, meist angepasst an die vorliegenden Hölzer, hergestellt werden. Die am meisten verbreiten Herstellungsverfahren sind das Messer- und das Schälverfahren. Ein Furnier, dass vorzugsweise im Holzbau eingesetzt wird, besteht aus circa 3 mm starken Schälfurnieren aus Nadelholz und wird mit Phenolharz zu Platten oder Trägern bis hin zu Balken verpresst. Eine Verpressung erfolgt entweder taktweise in Etagenpressen oder kontinuierlich in Doppelbanddurchlaufpressen, die ebenfalls bereits in der holzverarbeitenden Industrie bekannt und eingeführt.

In automatisierten und allegemeinen Herstellungsverfahren werden die Furniere stapelweise auf Paletten angeliefert, in einer Vereinzelungsstation einer Beleimungsvorrichtung zugeführt und anschließend zu Furnierpaketen zusammengelegt. Die Zusammenlegung kann auf mehreren Arten erfolgen, beispielsweise einzeln und taktweise mit Hubvorrichtungen wie in US 4,797,169 A beschrieben. Aus US 6,865,800 B2 ist ein Verfahren zur Herstellung von Furnierschichtholz bekannt geworden, in der mittels einer Legestation mehrere Teile eines Furnierpaketes hergestellt werden, die Teile des Furnierpaketes zusammengeführt werden und die fertigen Furnierpakete schließlich an einen bestehenden Furnierpaketstrang angelegt werden um diese zu Furnierschichtholz zu verpressen. Die Vorrichtung zeichnet sich deutlich durch komplizierten und aufwendigen Anlagenbau auf. Die Furniere werden dabei treppenförmig zu Furnierschichtpaketen aufgebaut. Anschließend wird das Furnierschichtpaket an das Ende eines weiteren Furnierschichtpaketes herangefahren und dort möglichst passgenau abgelegt, vorzugsweise so, dass keine Lücken zwischen zwei Furnierschichtpaketen entstehen. Auch DE 198 82 772 C2 zeigt ein derartiges Verfahren und eine Vorrichtung zum Zusammenfügen eines Paketes aus Furnierplatten und Zuführen eines zusammengefügten Paketes zu einer Furnierpresse einzeln oder mit der Möglichkeit dieses Paket an ein vorheriges Paket passend anzulegen. Auch hier findet sich der Nachteil, dass die Anlage hochkomplex ausgeführt ist und insbesondere bei der Ablage des Paketes auf das nächste Transportband nicht unbedingt schonend mit dem Paket selbst umgeht. Neben dem Anfügen von fertigen Furnierpaketsträngen ist auch das automatisierte Legen von Furnieren mittels einer oder mehrere Industrieroboter bekannt oder das bilden eines Furnierstranges mit mehreren Furnierzuführvorrichtungen, wobei ebenfalls in komplizierter Anordnung und Aufbau die Furniere von oben und unten einem Strang zugeführt werden.

Ein Verfahren und eine Anlage zum kontinuierlichen Verleimen von Furniertafeln ist auch nach DE 196 27 024 A1 bekannt geworden und hat sich grundsätzlich bewährt. Insbesondere wurde aufgezeigt, wie vorzugsweise bei der Legung eine Vielzahl an Schichten Furniere respektive Furniertafeln übereinander zu einem Strang zusammengefügt und mit einem weiteren Strang verbunden in einer kontinuierlichen Presse zu einer Furnierschichtplatte verpresst werden können. Inhalt dieser Anmeldung ist hauptsächlich die versetzte Ablage bzw. Erstellung mehrere Schichten Furniere übereinander, damit nicht zwei Trennstellen von Furnieren benachbarter Ebenen übereinander zu liegen kommen.

Es hat sich aber auch gezeigt, dass insbesondere diese komplexe Anlagenform und das vorgeschlagene Verfahren, von dem die Erfindung ausgeht, mit heutigen Hochleistungsgeschwindigkeiten der Produktion (schnellaushärtende Leime) nicht mithalten kann, da hier zu große Massen exakt beschleunigt, abgebremst und verfahren werden müssen, um ein optimales Legemuster zu generieren. Insbesondere ist es von Nachteil, dass die Funktionalität des Verfahrens und damit die Produktionsgeschwindigkeit (Vorschub der kontinuierlich arbeitenden Presse) auf die maximal mögliche Zusammenlegegeschwindigkeit eines Furnierpaketes durch das Speicher- und Beschickband beschränkt ist.

Der Erfindung liegt die Aufgabe zugrunde, ein Verfahren und eine Stranglegestation anzugeben, mit dem Furnierpakete schonend aber mit hoher Geschwindigkeit zu einem Furnierpaketstrang gelegt werden können. Gleichwohl soll die Stranglegestation mit geringem baulichen Aufwand, aus beweglichen Teilen geringer Masse, Wartungsarm und Ausfallresistent aufgebaut sein.

Die Lösung dieser Aufgabe besteht für das Verfahren in der Abfolge der Verfahrensschritte nach Anspruch 1.

Der Furnierpaketstrang kann anschließend aufgeteilt und taktweise oder unaufgeteilt kontinuierlich verpresst werden. Durch die erfindungsgemäße Lehre ist es jetzt möglich die im Zuge der Globalisierung, der Fortentwicklung der Leime und besonders durch die technische Weiterentwicklung der verwendeten kontinuierlich arbeitenden Presse höheren Produktionsgeschwindigkeiten mit einer im Aufbau einfachen Stranglegestation zu bedienen. Dies ergibt sich durch den Verzicht auf das Speicher- und Beschickband und der gleichzeitigen Sicherstellung, dass die Furnierpakete nicht auf einem unterbrochenen stationären Rollgang auflaufen müssen während der bewegliche Furnierauflegerollgang ausgeschwenkt ist, was Schäden an der unteren Flächenseite der Furnierpakete verhindert, weil eine maximale Abstützung möglich ist.

Weitere vorteilhafte und zweckmäßige Ausgestaltungen der Erfindung sind nachstehend anhand der Zeichnung näher beschrieben und in den Unteransprüchen angegeben.

Es zeigen:
- Figur 1: In einer seitlichen schematischen Ansicht mittig eine Stranglegestation und entgegen der Produktionsrichtung eine Paketfördervorrichtung für ankommende Furnierpakete und eine Strangtransportvorrichtung in Produktionsrichtung zum Abtransport des fertigen Furnierstranges,
- Figur 2: den Anhebevorgang der Rollenhebevorrichtung mit zusätzlicher Unterstützung durch eine optionale Schwenkachse der Strangtransportvorrichtung,
- Figur 3: das Übernehmen des ersten Furnierpakets durch die Stützvorrichtung,
- Figur 4: das Verfahren der Rollenhebevorrichtung in Ausgangsposition zwischen die stationäre Rollenfördervorrichtung mit dem ankommendem weiteren Furnierpaket,
- Figur 5: das Positionieren der in Produktionsrichtung weisenden Kante des zweiten Furnierpakets unter die entgegen der Produktionsrichtung weisenden Kante des ersten Furnierpakets gehalten durch die Stützvorrichtung,
- Figur 6: die optionale Feinjustierung der Kante der beiden Furnierpakete zueinander und der Beginn des Ausfahrens der Stützvorrichtung entgegen oder seitlich zur Produktionsrichtung in eine Ruhepositoin und
- Figur 7: die Ausbildung des Furniestranges und dessen Weitertransport in Produktionsrichtung zur Wiederholung der Verfahrensschritte nach den Figuren 1 bis 6.

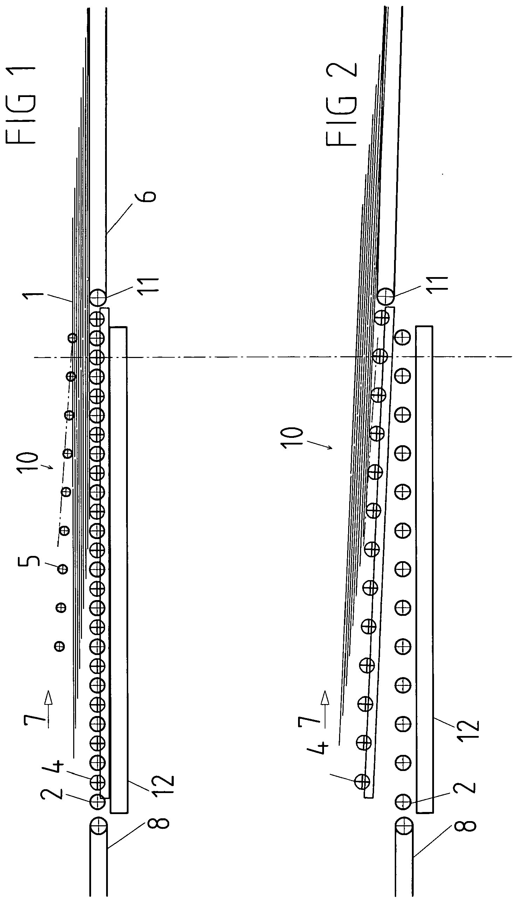

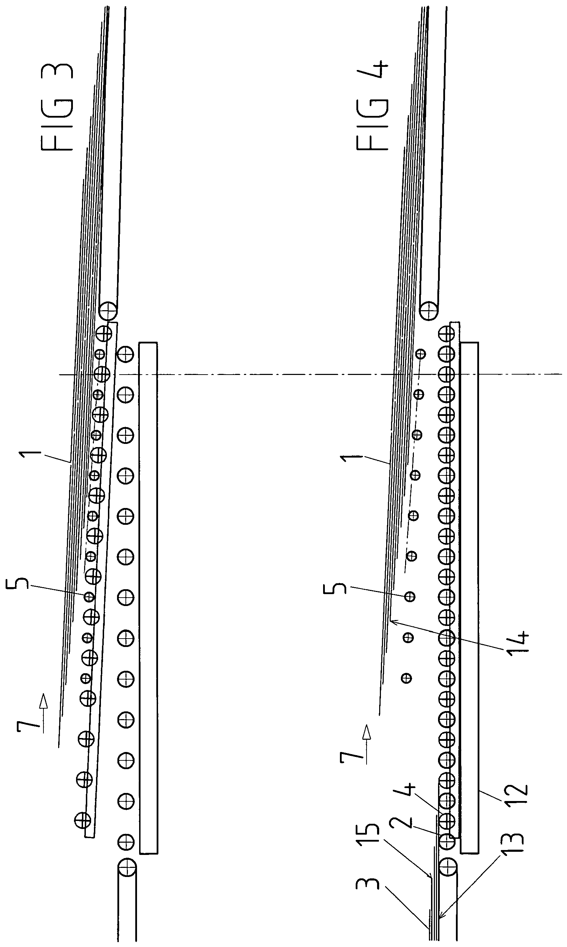

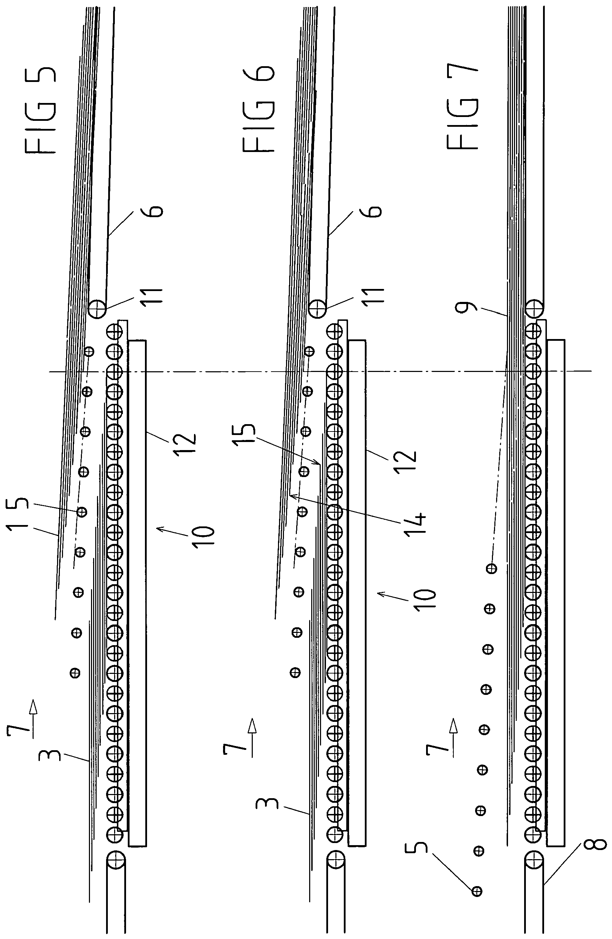

Die Figuren 1 bis 7 zeigen den Ablauf des Verfahren zur Herstellung eines Furnierstranges aus mehreren Lagen einzelner Furniere im Zuge der Herstellung von Furnierschichtholz, mit einem die Furnierpakete 1, 3 an eine Stranglegestation 10 übergebende Paketfördervorrichtung 8 und einem den Furnierstrang 9 von der Stranglegestation 10 abnehmende Strangtransportvorrichtung 6, wobei die Stranglegestation 10 zumindest eine Rollenfördervorrichtung 2 und eine Rollenhebevorrichtung 4 zur Bildung eines Furnierstranges 9 aus den Furnierpaketen 1, 3 umfasst, und der Furnierstranges 9 anschließend aufgeteilt taktweise oder kontinuierlich in einer Presse verpresst wird. Der Ablauf der Verfahrensschritte ergibt sich dabei aus den Figuren wie folgt: das erste Furnierpaket 1 wird durch Paketfördervorrichtung 8 der Rollenfördervorrichtung 2 und der Rollenhebevorrichtung 4 in die Stranglegestation 10 eingefahren, durch die Rollenhebevorrichtung 4 wird das erste Furnierpaket 1 zumindest teilweise von der Rollenfördervorrichtung 2 abgehoben. Währenddessen oder anschließend wird das erste Furnierpaket 1 durch eine aus einer Ruheposition in eine Eingriffsposition verfahrenden Stützvorrichtung 5 von der Rollenhebevorrichtung 4 übernommen. Die Stützvorrichtung 5 kann dabei beispielsweise seitlich außerhalb des Bereiches der Furnierpakete darunter eingefahren werden. Die Rollenhebevorrichtung 4 wird nach der Übergabe anschließend wieder in die Anfangsposition zur Rollenfördervorrichtung 2 verfahren und ein zweites Furnierpaket 3 wird von der Rollenfördervorrichtung 2 und der Rollenhebevorrichtung 4 von der Paketfördervorrichtung 8 übernommen. Die Rollenfördervorrichtung 4 und/oder die Rollenhebevorrichtung 4 positionieren das zweite Furnierpaket 3 derart, dass die Stützvorrichtung 5 das erste Furnierpaket 1 mit seinen entgegen der Produktionsrichtung 7 weisenden Kanten 14 zur Ausbildung eines Furnierstranges 9 an die in Produktionsrichtung 7 weisenden Kanten 15 des zweiten Furnierpaketes 3 ablegt kann, wobei während oder nach dem Ablegen die Stützvorrichtung 5 wieder von der Eingriffsposition in eine Ruheposition verfährt. Insbesondere ist das Verfahren geeignet die Furnierpakete 1, 3 in Produktionsrichtung 7 mit dem an der Paketfördervorrichtung 8 aufliegenden Flächenseite 13 zuerst in die Stranglegestation 10 einzufahren und somit mit der Kante 15 der Furnierpakete 1, 3 eine entgegen der Produktionsrichtung 7 ansteigende Treppe auszubilden. Besonders bevorzugt beginnt die Rollenhebevorrichtung 4 erst mit dem Anheben des Furnierpaketes 1, wenn zumindest ein erster Teil des Furnierpaketes 1 auf die Strangtransportvorrichtung 6 übergewechselt hat. Natürlich sind hier auch zwischenschritte denkbar, die der Fachmann entsprechend in der Ablaufsteuerung programmiert um noch eine höherer Geschwindigkeit zu erreichen. Bevorzugt wird eine zur Stranglegestation 10 weisende Schwenkachse 11 der Strangtransportvorrichtung 6 zumindest teilweise das Anheben des Furnierpaketes 1 unterstützen um Schäden oder Verschiebeeffekte am bereits gebildeten Furnierstrang zu vermeiden. Die Rollenhebevorrichtung kann je nach Furnierbreite einseitig, entgegen der Produktionsrichtung oder quer zur Produktionsrichtung ein- und wieder ausgefahren werden um die Ruhe- oder die Eingriffsposition zu erreichen. Bevorzugt wird bei großen Breiten von beiden Längsseiten aus in eine Eingriffsposition verfahren. Die Rollenhebevorrichtun kann dabei über einen Drehpunkt in Produktionsrichtung angeordneten Drehpunkt verschwenkt werden oder entsprechend beidseitig hochgefahren werden.

Es ist nachvollziehbar, dass die Fördergeschwindigkeit der Strangtransportvorrichtung zur Presse oder zu einer Aufteilvorrichtung der entsprechenden Produktionsgeschwindigkeit entspricht und während des Vorganges des Zusammenlegens des Furnierstranges beibehalten wird. Im Gegensatz hierzu weist das zweite Furnierpaket auf dem Furnierpaketförderer und/oder der Kombination der Rollenfördervorrichtung/Rollenhebevorrichtung ein differenziertes Geschwindigkeitsprofil auf, um das erste Furnierpaket während des Anhebens schnell zu unterfahren und in richtiger Legeposition anhalten zu können. Es kann hilfreich sein, wenn das Furnierpaket 1, 3 aus nur auf der Oberseite beleimten Schichten besteht und ein entsprechendes unbeleimtes Furnier als Deckschicht erst nach der Strangbildung auf dem Furnierstrang aufgelegt wird. Diese Variante und die Presse oder die Aufteilvorrichtung sind aber in den Figuren aufgrund der Überschaubarkeit nicht dargstellt. Wird die Stützvorrichtung als längsverfahrbarer Hebeförderer (Kettenumlauf oder Fahrwagen) ausgebildet sollte dieser in und entgegen der Produktionsrichtung verfahrbar angeordnet sein.

Die zur Steuerung und Regelung des Ablaufes zur Bildung des Furnierstranges notwendigen Einzelheiten wurden aufgrund der Übersichtlichkeit nicht in die vorliegende Ausarbeitung mit aufgenommen, sind sie doch im Rahmen einer Ausführung spezifisch an die Vorrichtungen anzupassen und entsprechend der notwendigen Geschwindigkeit und Verarbeitung der Furnierpakete anzupassen.

### Bezugszeichenliste: ZP 1013

- 1.: erstes Furnierpaket
- 2.: Rollenfördervorrichtung
- 3.: zweites Furnierpaket
- 4.: Rollenhebevorrichtung
- 5.: Stützvorrichtung
- 6.: Strangtransportvorrichtung (zur Presse/Aufteilvorrichtung)
- 7.: Produktionsrichtung
- 8.: Paketfördervorrichtung
- 9.: Furnierstrang
- 10.: Stranglegestation
- 11.: Schwenkachse von 6
- 12.: Rahmen von 10
- 13.: Flächenseite
- 14.: Kanten von 1
- 15.: Kanten von 3

## Patentansprüche

1. Verfahren zur Herstellung eines Furnierstranges aus mehreren Lagen einzelner Furniere im Zuge der Herstellung von Furnierschichtholz, mit einer die aus Furnieren gebildete Furnierpakete (1, 3) an eine Stranglegestation (10) übergebende Paketfördervorrichtung (8) und einer den Furnierstrang (9) von der Stranglegestation (10) abnehmende Strangtransportvorrichtung (6), wobei die Stranglegestation (10) zumindest eine Rollenfördervorrichtung (2) und eine Rollenhebevorrichtung (4) zur Bildung eines Furnierstranges (9) aus den Furnierpaketen (1, 3) umfasst, und der Furnierstranges (9) anschließend aufgeteilt taktweise oder kontinuierlich in einer Presse verpresst wird, **gekennzeichnet durch** den Ablauf folgender Verfahrensschritte:
**1.1** das erste Furnierpaket (1) wird **durch** Paketfördervorrichtung (8) der Rollenfördervorrichtung (2) und der Rollenhebevorrichtung (4) in die Stranglegestation (10) übergeben,
**1.2 durch** die Rollenhebevorrichtung (4) wird das erste Furnierpaket (1) zumindest teilweise von der Rollenfördervorrichtung (2) abgehoben,
**1.3** während oder nach dem Anhebevorgang wird das erste Furnierpaket (1) **durch** eine aus einer Ruheposition in eine Eingriffsposition verfahrenden Stützvorrichtung (5) von der Rollenhebevorrichtung (4) übernommen,
**1.4** die Rollenhebevorrichtung (4) wird anschließend wieder in die Anfangsposition zur Rollenfördervorrichtung (2) verfahren und
**1.5** ein zweites Furnierpaket (3) wird von der Rollenfördervorrichtung (2) und der Rollenhebevorrichtung (4) von der Paketfördervorrichtung (8) übernommen, wobei
**1.6** die Rollenfördervorrichtung (2) und/oder die Rollenhebevorrichtung
(4) das zweite Furnierpaket (3) derart positionieren, dass die Stützvorrichtung (5) das erste Furnierpaket (1) mit seinen entgegen der Produktionsrichtung (7) weisenden Kanten (14) zur Ausbildung eines Furnierstranges (9) an die in Produktionsrichtung (7) weisenden Kanten (15) des zweiten Furnierpaketes (3) ablegt, wobei
**1.7** während oder nach dem Ablegen die Stützvorrichtung (5) wieder von der Eingriffsposition in eine Ruheposition verfährt.

2. Verfahren nach Anspruch **1, dadurch gekennzeichnet, dass** die Furnierpakete (1, 3) in Produktionsrichtung (7) mit dem an der Paketfördervorrichtung (8) aufliegenden Flächenseite (13) zuerst in die Stranglegestation (10) einfahren.

3. Verfahren nach Anspruch 1 oder 2, **dadurch gekennzeichnet, dass** im Schritt 1.2 die Rollenhebevorrichtung (4) mit dem Anheben des Furnierpaketes (1) beginnt, wenn zumindest ein erster Teil des Furnierpaketes (1) auf die Strangtransportvorrichtung (6) übergewechselt hat.

4. Verfahren nach einem oder mehreren der vorhergehenden Ansprüche, **dadurch gekennzeichnet, dass** eine zur Stranglegestation (10) weisende Schwenkachse (11) der Strangtransportvorrichtung (6) zumindest teilweise das Anheben des Furnierpaketes (1) unterstützt.

## Claims

1. Method for producing a veneer strand from several layers of individual veneers in the course of the production of laminated veneer lumber, comprising a package conveying device (8) transferring the veneer packages (1, 3) formed from the veneers to a strand laying station (10) and a strand transport device (6) receiving the veneer strand (9) from the strand laying station (10), wherein the strand laying station (10) comprises at least one roller conveyor device (2) and a roller lifting device (4) for forming a veneer strand (9) from the veneer packages (1, 3), and the veneer strand (9) is pressed subsequently divided into cycles or continuously in a press, **characterized by** the sequence of the following method steps:
1.1 the first veneer package (1) is transferred by the package conveying device (8) of the roller conveyor device (2) and the roller lifting device (4) into the strand laying station (10),
1.2the first veneer package (1) is lifted off at least partially from the roller conveyor device (2) through the roller lifting device (4),
1.3during or after the lifting operation, the first veneer package (1) is received from the roller lifting device (4) by a supporting device (5) moving out of a rest position into an engaged position,
1.4the roller lifting device (4) is then moved back to the initial position to the roller conveyor device (2), and
1.5a second veneer package (3) is received by the roller conveyor device (2) and the roller lifting device (4) from the package conveying device (8), wherein
1.6the roller conveyor device (2) and/or the roller lifting device (4) position the second veneer package (3) in such a way that the supporting device (5) deposits the first veneer package (1) with its edges (14) facing against the production direction (7) to form a veneer strand (9) on edges (15) of the second veneer package (3) facing in the production direction (7), wherein
1.7during or after the depositing the supporting device (5) moves again from the engaged position to a rest position.

2. A method according to claim 1, **characterized in that** the veneer packages (1, 3) move in the production direction (7) first into the strand laying station (10) with the surface side (13) resting on the package conveying device (8).

3. A method according to claim 1 or 2, **characterized in that** in step 1.2, the roller lifting device (4) begins with the lifting of the veneer package (1) when at least a first part of the veneer package (1) has changed over to the strand transport device (6).

4. A method according to one or more of the preceding claims, **characterized in that** a swiveling axis (11) of the strand transport device (6) facing the strand laying station (10) at least partially supports the lifting of the veneer package (1).

## Revendications

1. Procédé de fabrication d'une nappe de placages composé de plusieurs plis de placages individuels dans le cadre de la fabrication de lamibois, avec un dispositif de transport de paquets (8) transmettant les paquets de placages (1, 3) formés de placages à une station de pose de nappe (10) et un dispositif de transport de nappe (6) prélevant la nappe de placages (9) de la station de pose de nappe (10), la station de pose de nappe (10) comprenant au moins un dispositif de transport à rouleaux (2) et un dispositif de levage à rouleaux (4) pour former une nappe de placages (9) à partir des paquets de placages (1, 3) et la nappe de placages (9) étant ensuite divisée et pressée de façon cadencée ou continue dans une presse,
**caractérisé par** le déroulement des étapes de procédé suivantes :
**1.1** le premier paquet de placages (1) est transmis par le dispositif de transport de paquets (8) au dispositif de transport à rouleaux (2) et au dispositif de levage à rouleaux (4) dans la station de pose de nappe (10), **1.2** le premier paquet de placages (1) est relevé au moins partiellement du dispositif de transport à rouleaux (2) par le dispositif de levage à rouleaux (4),
**1.3** pendant ou après l'opération de relevage, le premier paquet de placages (1) est pris en charge par un dispositif de soutien (5) du dispositif de levage à rouleaux (4) qui se déplace d'une position de repos dans une position d'engagement,
**1.4** le dispositif de levage à rouleaux (4) est ensuite de nouveau déplacé dans la position initiale par rapport au dispositif de transport à rouleaux (2) et **1.5** un deuxième paquet de placages (3) est pris en charge du dispositif de transport de paquets (8) par le dispositif de transport à rouleaux (2) et le dispositif de levage à rouleaux (4),
**1.6** le dispositif de transport à rouleaux (2) et/ou le dispositif de levage à rouleaux (4) positionnant le deuxième paquet de placages (3) de telle sorte que le dispositif de soutien (5) dépose le premier paquet de placages (1) avec son bord (14) dirigé à l'encontre du sens de production (7) sur le bord (15) du deuxième paquet de placages (3) dirigé dans le sens de production (7) pour former une nappe de placages (9),
**1.7** le dispositif de soutien (5) se déplaçant de nouveau de la position d'engagement dans une position de repos pendant ou après la dépose.

2. Procédé selon la revendication 1, **caractérisé en ce que** les paquets de placages (1, 3) entrent dans la station de pose de nappe (10) avec la face (13) reposant sur le dispositif de transport de paquets (8) en premier dans le sens de production (7).

3. Procédé selon la revendication 1 ou 2, **caractérisé en ce qu'**à l'étape 1.2, le dispositif de levage à rouleaux (4) commence à relever le paquet de placages (1) lorsqu'au moins une première partie du paquet de placages (1) a été transférée sur le dispositif de transport de nappe (6).

4. Procédé selon l'une ou plusieurs des revendications précédentes, **caractérisé en ce qu'**un axe de pivotement (11) du dispositif de transport de nappe (6) dirigé vers la station de pose de nappe (10) soutient au moins partiellement le relevage du paquet de placages (1).
